# EUROPÄISCHE PATENTANMELDUNG

(11) **EP 1 882 540 A2**
(43) Veröffentlichungstag der Anmeldung: **30.01.2008**
(21) Anmeldenummer: 07109973.3
(22) Anmeldetag: 11.06.2007
(51) Int. Cl.: B23H 7/18, B23H 7/26

(54) **Verfahren und Vorrichtung zur elektrochemischen Verarbeitung**

(30) Priorität: 24.07.2006 DE 102006034116
(71) Anmelder: ROBERT BOSCH GMBH, 70442 Stuttgart (DE)
(72) Erfinder: Hackenberg, Juergen, 74343, Sachsenheim (DE); Reitzle, Alexander, 89231, Neu-Ulm (DE); Krings, Norman, 71636, Ludwigsburg (DE)

(57) **Zusammenfassung**

Die Erfindung betrifft ein Verfahren und eine Vorrichtung zur elektrochemischen Bearbeitung einer Oberfläche (3) eines Werkstückes (5), bei dem eine Elektrode (7) in das Werkstück (5) gesenkt wird, wobei das Werkstück (5) und die Elektrode (7) von einem Elektrolyten umspült werden und die Elektrode (7) eine Vorschubbewegung (9) und eine Oszillationsbewegung (11) ausführt, wodurch Material von der Oberfläche (3) des Werkstückes (5) abgetragen wird. Die Oszillationsbewegung (11) der Elektrode (7) wird in dem dem Werkstück (5) zugewandten Umkehrpunkt (17, 25) für eine kurze Zeit angehalten.

## Beschreibung

### Stand der Technik

Die vorliegende Erfindung betrifft ein Verfahren zur elektrochemischen Bearbeitung einer Oberfläche eines Werkstückes gemäß dem Oberbegriff des Anspruchs 1 sowie eine Vorrichtung zur elektrochemischen Bearbeitung einer Oberfläche eines Werkstückes gemäß dem Oberbegriff des Anspruchs 8.

Mit Hilfe der elektrochemischen Metallbearbeitung (ECM) lässt sich in eine Oberfläche eines Werkstückes eine Vertiefung mit einer vorgegebenen Form erzeugen. Hierzu wird eine Elektrode, deren Oberfläche ein Negativabbild der Form der zu erzeugenden Vertiefung ist, mit einer Vorschubgeschwindigkeit in das Werkstück, dessen Oberfläche bearbeitet werden soll, abgesenkt. Im Allgemeinen ist die Vorschubgeschwindigkeit dabei konstant. Das Werkzeug und das Werkstück werden von einem Elektrolyten umspült. Als Elektrolyt wird im Allgemeinen eine elektrisch leitende Salzlösung eingesetzt. Durch Anlegen eines Gleichstroms/einer Gleichspannung bzw. von Strom-/Spannungspulsen an die Elektrode wird aus dem Werkstück elektrochemisch Material abgetragen. Um eine hochpräzise Bearbeitung zu erzielen, wird dem linearen Vorschub der Elektrode eine sinusförmige Oszillationsbewegung überlagert. Die zum elektrochemischen Materialabtrag erforderlichen Strom-/Spannungspulse werden nur nahe des unteren Umkehrpunktes der sinusförmigen Oszillationsbewegung, das heißt zu dem Zeitpunkt, bei dem die Elektrode sich am dichtesten am Werkstück befindet, abgegeben.

Das Abtragen des Werkstückmaterials erfolgt an der Position, an der der Abstand zwischen der Elektrode und dem Werkstück am geringsten ist, da hier der kleinste elektrische Widerstand des Elektrolyten vorliegt. Durch die sinusförmige Oszillationsbewegung der Elektrode lässt sich der Abstand zwischen der Elektrode und dem Werkstück auf ca. 10 bis 30 µm verringern. Die Strom-/Spannungspulse werden nur nahe des unteren Umkehrpunktes der Sinusbewegung abgegeben. Die Oszillationsamplitude und die Oszillationsbewegungsform sind innerhalb der ECM-Maschinentechnik festgelegt und können nicht verändert werden. Diese Reglementierung auf eine sinusförmige Oszillationsbewegung erlaubt die präzise Bearbeitung des Werkstückes nur innerhalb eines kurzen Zeitraumes nahe dem unteren Wendepunkt der Bewegung. Das nutzbare Zeitfenster für die Präzisionsbearbeitung liegt bei etwa 10 % der Periodendauer einer sinusförmigen Oszillationsbewegung. In der restlichen Zeit findet keine Bearbeitung statt.

### Offenbarung der Erfindung

### Vorteile der Erfindung

Bei dem erfindungsgemäßen Verfahren zu elektrochemischen Bearbeitung einer Oberfläche eines Werkstückes, wird eine Elektrode in das Werkstück gesenkt, wobei das Werkstück und die Elektrode von einem Elektrolyten umspült werden und die Elektrode eine Vorschubbewegung und eine Oszillationsbewegung ausführt, wodurch Material von der Oberfläche des Werkstückes abgetragen wird. Die Oszillationsbewegung der Elektrode wird erfindungsgemäß in dem in dem Werkstück zugewandten Umkehrpunkt für eine kurze Zeit angehalten. Kurze Zeit gemäß der Erfindung bedeutet, dass die Zeit, in der die Elektrode angehalten wird, größer als 10% und kleiner als 80% einer Periodendauer eines sich wiederholenden Bewegungsmusters ist, wobei hierunter auch eine Zusammensetzung einer Oszillationsbewegung mit anschließendem linearen Vorschub oder stehender Elektrode verstanden wird, abhängig von der Oszillationsfrequenz und der verwendeten Antriebstechnik. Ein Vorteil, die Oszillationsbewegung der Elektrode in dem dem Werkzeug zugewandten Umkehrpunkt für eine kurze Zeit anzuhalten, besteht darin, dass die Effizienz der ECM-Bearbeitung verbessert werden kann. So wird hierdurch der Zeitraum vergrößert, in dem einer oder mehrere Strompulse abgegeben werden, um Material aus der Oberfläche des Werkstückes abzutragen.

Die Amplitude der Oszillationsbewegung liegt vorzugsweise im Bereich von 10 µm bis 1,5 mm, insbesondere im Bereich von 200 bis 250 µm. Die Frequenz der Oszillationsbewegung liegt vorzugsweise im Bereich von 1 bis 250 Hz.

In einer bevorzugten Ausführungsform gibt die Elektrode mindestens einen Strom/Spannungspuls ab, während sie sich in dem dem Werkstück zugewandten Umkehrpunkt der Oszillationsbewegung befindet. Während der übrigen Oszillationsbewegung wird von der Elektrode kein Strom abgegeben. Dies hat den Vorteil, dass nur dann Material aus dem Werkstück abgetragen wird, während sich die Elektrode in dem dem Werkstück zugewandten Umkehrpunkt befindet. Hierdurch ist eine hohe Präzision des ECM-Prozesses möglich. Ein Abtrag erfolgt nur in Bewegungsrichtung der Elektrode und nicht quer zu dieser. Die im Werkstück abgebildete Struktur der Elektrode wird somit nicht lateral aufgeweitet.

Um den zur Abbildung der Elektrodengeometrie in das Werkstück notwendigen Vorschub zu erzielen wird in einer Ausführungsform der dem Werkstück zugewandte Umkehrpunkt der Elektrode mit jeder Oszillationsperiode weiter in das Werkstück verschoben. Somit wird bei konstanter Position der Elektrode in dem dem Werkstück zugewandten Umkehrpunkt Material aus dem Werkstück abgetragen. Mit der nächsten Oszillationsbewegung ist die Vertiefung im Werkstück größer, so dass die Elektrode weiter in das Werkstück hineinverschoben werden kann.

In einer alternativen Ausführungsform wird die Elektrode, während sie sich in dem dem Werkstück zugewandten Umkehrpunkt der Oszillationsbewegung befindet, in das Werkstück verschoben. Hierbei kann der Abstand zwischen dem Boden der Vertiefung im Werkstück und der Elektrode konstant gehalten werden. In dem Maße, wie Material aus dem Werkstück abgetragen wird, wird die Elektrode nachgeführt. Hierbei beginnt der Haltepunkt der Oszillationsbewegung jeweils an der Position, an der der vorhergehende geendet hat. Der Vorschub, während sich die Elektrode in dem dem Werkstück zugewandten Umkehrpunkt der Oszillationsbewegung befindet, kann hierbei zum Beispiel linear erfolgen. Bevorzugt wird dem Vorschub jedoch eine hochfrequente Schwingung überlagert, deren Amplitude vorzugsweise im Bereich von 0,5 bis 10 µm, insbesondere bei 1 µm liegt. Die Frequenz der hochfrequenten Schwingung ist vorzugsweise um den Faktor 2 bis 6, insbesondere um den Faktor 3 bis 5 größer als die Frequenz der Oszillationsschwingung. Durch die Überlagerung mit der hochfrequenten Schwingung mit sehr kleiner Amplitude wird verhindert, dass sich Reaktionsprodukte, zum Beispiel Metallhydroxide oder ähnliche, auf dem Boden der durch die Bearbeitung erzeugten Vertiefung absetzen. Hierdurch nimmt die Bearbeitungseffizienz des Bearbeitungsprozesses ab, da eine Schicht aus Metallhydroxiden einen weiteren elektrischen Widerstand darstellt, an welchem Stromverluste stattfinden.

In einer Ausführungsform verläuft die Oszillationsbewegung zwischen zwei dem Werkstück zugewandten Umkehrpunkten sinusförmig. Neben dem sinusförmigen Verlauf ist es aber auch möglich, dass die Oszillationsbewegung einen gegebenenfalls asymmetrischen dreieckförmigen, einen rechteckförmigen oder einen gegebenenfalls asymmetrischen trapezförmigen Verlauf aufweist.

Die Erfindung betrifft weiterhin eine Vorrichtung zur elektrochemischen Bearbeitung einer Oberfläche eines Werkstückes, welche eine Elektrode umfasst, die in Richtung des Werkstückes verschiebbar ist und mit einer Oszillationsbewegung beaufschlagbar ist. Die Oszillationsbewegung kann in ihrem dem Werkstück zugewandten Umkehrpunkt angehalten werden. Die technische Realisierung erfolgt zum Beispiel durch Direktantriebe wie Linearmotoren, Tauchspulen oder Servo-Motoren, durch entsprechend geschliffene Exzenterwellen, durch Piezoantriebe, durch Hydraulik- oder Pneumatikantriebe oder durch magnetostriktive Antriebe. Um eine präzise Bearbeitung zu gewährleisten ist es erforderlich, dass hochwertige Steuerungs-/Regelungssysteme und hochauflösende Wegmesssysteme verwendet werden.

In einer Ausführungsform kann der Elektrode während der Vorschubbewegung in dem dem Werkstück zugewandten Umkehrpunkt eine hochfrequente Schwingung überlagert werden.

Das erfindungsgemäße Verfahren zur elektrochemischen Bearbeitung für eine Oberfläche eines Werkstückes ermöglicht höhere Materialabtragsraten am Werkstück, da nur im Frontspalt bearbeitet wird. Hieraus resultiert eine geringere Bearbeitungszeit, wodurch die Kosten für jedes Teil verringert werden. Auch wird durch das erfindungsgemäße Verfahren die Abbildungsgenauigkeit des Werkzeugs im Werkstück erhöht, das heißt die Präzision der Bearbeitung wird verbessert, da eine laterale Metallauflösung während der Bearbeitung verhindert wird. Abhängig von der zu formenden Vertiefung in der Oberfläche des Werkstückes können für jedes Bearbeitungsproblem individuelle Bewegungen, das heißt jeweils separat die Amplitude, die Frequenz und die Form, definiert werden, wodurch jeweils ein optimales Bearbeitungsergebnis bezüglich der Geschwindigkeit, der Präzision und der Oberflächenqualität erzielt wird.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: eine schematische Darstellung eines Werkstücks mit Elektrode,
- Figur 2.1: die Oszillationsbewegung der Elektrode gemäß dem Stand der Technik,
- Figur 2.2: die Vorschubbewegung der Elektrode gemäß dem Stand der Technik,
- Figur 2.3: die Überlagerung der Oszillations- und Vorschubbewegung gemäß dem Stand der Technik,
- Figur 3: die erfindungsgemäße Bewegung der Elektrode in Abhängigkeit von der Zeit in einer ersten Ausführungsform,
- Figur 4: die erfindungsgemäße Bewegung der Elektrode in Abhängigkeit von der Zeit in einer zweiten Ausführungsform und
- Figur 5: die erfindungsgemäße Bewegung der Elektrode in Abhängigkeit von der Zeit in einer dritten Ausführungsform.

### Ausführungsformen der Erfindung

Figur zeigt in schematischer Darstellung ein Werkstück mit Elektrode.

Um eine Vertiefung 1 in eine Oberfläche 3 eines Werkstückes 5 zu formen, wird eine Elektrode 7 in das Werkstück gesenkt. Die Elektrode 7 und das Werkstück 5 sind hierbei von einem Elektrolyten umspült. Geeignete Elektrolyten sind zum Beispiel elektrisch leitende Salzlösungen wie wässrige Natriumchlorid-Lösung als Oberflächenaktivierendes Medium und wässrige Natriumnitrat-Lösung als Oberflächenpassivierendes Medium. Das erfindungsgemäße Verfahren wird bevorzugt in Gegenwart eines Oberflächenpassivierenden Mediums durchgeführt, wobei neben einer Natriumnitrat-Lösung auch jede andere dem Fachmann bekannte Oberflächenpassivierende Lösung eingesetzt werden kann.

Um die Vertiefung 1 in der Oberfläche 3 des Werkstückes 5 durch elektrochemische Bearbeitung auszubilden ist es erforderlich, dass das Werkstück 5 elektrisch leitend ist. Zur Bearbeitung wird das Werkstück 5 als Anode und die Elektrode 7 als Kathode geschaltet. Sobald ein Strom oder eine Spannung zwischen dem Werkstück 5 und der Elektrode 7 angelegt wird, lösen sich Metallionen aus dem als Anode geschalteten Werkstück 5. Damit die Form der Elektrode 7 in der Oberfläche 3 des Werkstückes 5 abgebildet werden kann, ist die Elektrode 7 vorzugsweise aus einem Werkstoff ausgebildet, auf dem sich das aus dem Werkstück 5 aufgelöste Metall nicht abscheidet. Geeignete Werkstoffe für die Elektrode 7 sind zum Beispiel Edelstähle, Kupfer und seine Legierungen, Edelmetalle und Kohlenstoff, z.B. als Graphit.

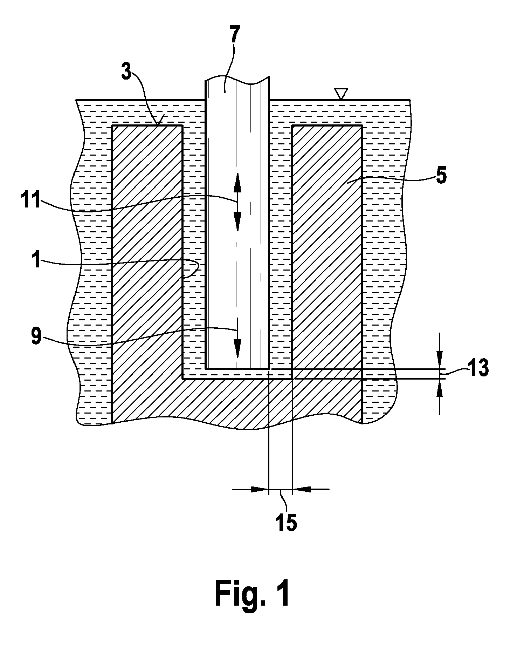

Der Auflösungsprozess des Werkstückes 5 findet dort statt, wo der Abstand zwischen der Elektrode 7 und dem Werkstück 5 am geringsten ist, da hier der kleinste elektrische Widerstand des Elektrolyten vorliegt. Die Vertiefung 1 wird dadurch erzeugt, dass die Elektrode 7 während des Auflösungsprozesses in das Werkstück 5 hineinverschoben wird. Diese Bewegung ist mit einem Pfeil 9 in Figur 1 dargestellt. Um die Präzision des elektrochemischen Bearbeitungsprozesses zu steigern wird der Vorschubbewegung 9 eine Oszillationsbewegung, die durch den Doppelpfeil 11 dargestellt ist, überlagert. Durch das Überlagern der Vorschubbewegung 9 mit der Oszillationsbewegung 11 ist es möglich, den Abstand zwischen dem Werkstück 5 und der Elektrode 7 in ihrer engsten Position zueinander auf 10 bis 30 µm zu verringern. Die zur Bearbeitung erforderlichen Strom- oder Spannungspulse werden nur nahe des unteren Umkehrpunktes der Oszillationsbewegung abgegeben.

Aufgrund der Oszillationsbewegung 11, die der Vorschubbewegung 9 überlagert ist, befindet sich die Elektrode 7 in ständiger Bewegung. Dies führt dazu, dass sich das Verhältnis der elektrischen Widerstände aus dem Frontspalt 13 zum Seitenspalt 15 kontinuierlich ändert. Bei einem großen Frontspalt 13 finden die elektrochemischen Prozesse bevorzugt im Seitenspalt 15 statt und bei kleinem Frontspalt 13 in Frontspalt 13 selbst. Elektrochemische Prozesse im Frontspalt 13 führen zu einem hohen Metallabtrag in Richtung der Vorschubbewegung 9 und ermöglichen damit ein schnelles Bearbeiten bei einer hohen Präzision der Bearbeitung. Elektrochemische Prozesse im Seitenspalt 15 bewirken hingegen eine laterale Aufweitung der abgebildeten Struktur im Werkstück. Hierdurch nimmt die Präzision ab. Zudem ist aufgrund des größeren Abstandes der Metallabtrag nur gering. Bei einer sinusförmigen Oszillationsbewegung 11 ergibt sich daher nur ein sehr kurzes Zeitfenster zur präzisen Bearbeitung des Werkstückes 5, in welchem der Frontspalt 13 im Vergleich zum Seitenspalt 15 klein genug ist, um hohe Abtragsraten bei hoher Präzision zu erreichen.

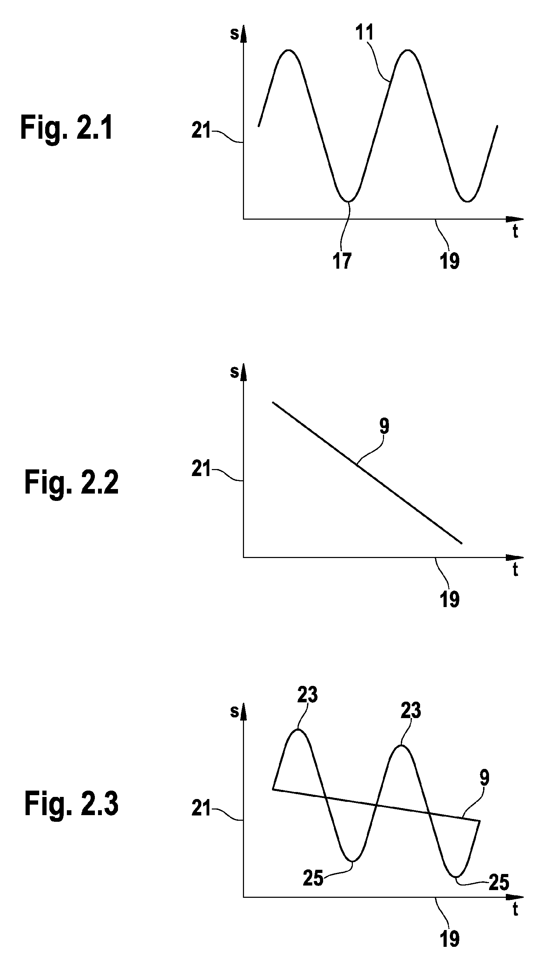

In den Figuren 2.1 bis 2.3 ist die Bewegung der Elektrode 7 in Abhängigkeit von der Zeit dargestellt. Figur 2.1 zeigt die Oszillationsbewegung 11 der Elektrode, Figur 2.2 die Vorschubbewegung 9 und Figur 2.3 die Bewegung der Elektrode 7, die sich durch Überlagerung der Oszillationsbewegung 11 und der Vorschubbewegung 9 ergibt. In den Figuren 2.1 bis 2.3 ist auf der Abszisse 19 jeweils die Zeit und auf der Ordinate 21 der Weg der Elektrode 7 aufgetragen.

Bei den aus dem Stand der Technik bekannten Verfahren ist die Oszillationsbewegung 11 der Elektrode 7 sinusförmig. Da der Abstand zwischen dem Werkstück 5 und der Elektrode 7 jeweils dann am geringsten ist, wenn die Oszillationsbewegung 11 den dem Werkstück zugewandten Umkehrpunkt 17 erreicht, wird an diesem Punkt die höchste Abtragsrate bei gleichzeitig großer Präzision, das heißt nur geringem oder gar keinem lateralen Abtrag erzielt. Durch das Abtragen von Metall aus dem Werkstück 5 wird die Vertiefung 1 weiter in das Werkstück vorgetrieben. Um den Abstand zwischen Elektrode 7 und Werkstück 5 zu dem Zeitpunkt, zu dem die Elektrode 7 den dem Werkstück zugewandten Umkehrpunkt 17 erreicht, immer möglichst gering zu halten, führt die Elektrode 7 gleichzeitig eine Vorschubbewegung 9 aus. Die Vorschubbewegung, wie sie im Stand der Technik durchgeführt wird, ist in Figur 2.2 dargestellt. Hierbei ist zu erkennen, dass die Vorschubbewegung 9 der Elektrode 7 linear über der Zeit verläuft.

Durch das Überlagern der Vorschubbewegung 9 und der Oszillationsbewegung 11 ergibt sich eine Bewegung der Elektrode 7, wie sie in Figur 2.3 dargestellt ist. Mit Bezugszeichen 9 ist auch in Figur 2.3 die Vorschubbewegung der Elektrode dargestellt. Die der Vorschubbewegung 9 überlagerte Oszillationsbewegung 11 führt dazu, dass sich der obere Umkehrpunkt 23 und der untere Umkehrpunkt 25 mit jeder Periode weiter nach unten verschieben.

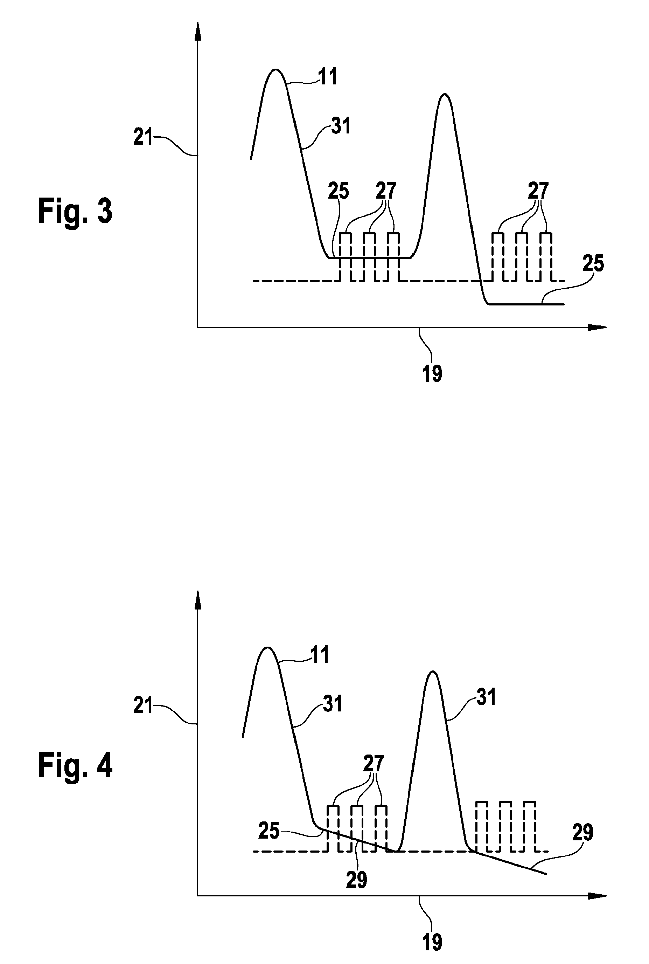

Figur 3 zeigt den Weg der Elektrode 7 in Abhängigkeit von der Zeit in einer ersten Ausführungsform.

Auch in der Darstellung in Figur 3 ist auf der Abszisse 19 die Zeit und auf der Ordinate 21 der Weg der Elektrode 7 aufgetragen. Erfindungsgemäß wird, wie in Figur 3 dargestellt, die Oszillationsbewegung 11 im unteren Umkehrpunkt 25 angehalten. Der untere Umkehrpunkt 25 ist dabei der dem Werkstück 5 zugewandte Umkehrpunkt. Das heißt, dass bei Erreichen des unteren Umkehrpunktes 25 der Abstand zwischen Werkstück 5 und Elektrode 7 am geringsten ist und damit der Frontspalt 13 sein kleinstes Maß aufweist. Durch das Anhalten der Oszillationsbewegung 11 im unteren Umkehrpunkt 25 ist es möglich, über einen längeren Zeitraum Material aus dem Werkstück 5 abzutragen als dies bei einer reinen Sinusbewegung der Oszillationsbewegung 11 möglich ist. Hierdurch wird die Effizienz der elektrochemischen Bearbeitung erhöht, da die Pausenzeiten reduziert werden. Eine schnellere Bearbeitung ist möglich. Um zu vermeiden, dass sich die durch die elektrochemische Bearbeitung erzeugte Vertiefung 1 lateral erweitert, werden die Elektrode 7 und das Werkstück 5 jeweils nur dann mit Strom bzw. Spannung beaufschlagt, während sich die Elektrode 7 an ihrem unteren Umkehrpunkt 25 befindet. Hierzu wird mindestens ein Strompuls abgegeben. In Figur 3 ist beispielhaft dargestellt, dass in dem Zeitraum, in dem sich die Elektrode 7 in ihrem unteren Umkehrpunkt 25 befindet, drei Strompulse 27 abgegeben werden. Während der Oszillationsbewegung 11 zwischen dem Erreichen zweier unterer Umkehrpunkte 25 ist kein Strom an Werkstück 5 und Elektrode 7 angelegt. Da durch die Strompulse 27 in dem Zeitraum, in dem sich die Elektrode 7 an ihrem unteren Umkehrpunkt 25 befindet, Material aus dem Werkstück 5 gelöst wird und so die Vertiefung 1 weiter in das Werkstück 5 getrieben wird, ist es notwendig, dass die Elektrode 7 eine Vorschubbewegung durchführt. In der in Figur 3 dargestellten Ausführungsform erfolgt die Vorschubbewegung dabei jeweils dadurch, dass der untere Umkehrpunkt 25 mit jeder Periode weiter in das Werkstück 5 geschoben wird.

Figur 4 zeigt die erfindungsgemäße Bewegung der Elektrode 7 in Abhängigkeit von der Zeit in einer zweiten Ausführungsform.

Die in Figur 4 dargestellte Ausführungsform unterscheidet sich von der in Figur 3 dargestellten dadurch, dass die Vorschubbewegung der Elektrode 7 durchgeführt wird, während die Oszillationsbewegung 11 im unteren Umkehrpunkt 25 angehalten wird. Hierdurch ergibt sich eine kontinuierliche Bewegung der Elektrode 7. Diese umfasst einen sinusförmigen Anteil 31 während die Oszillationsbewegung 11 durchgeführt wird und einen linearen Anteil 29, zu dem die Elektrode 9 vorgeschoben wird, während die Oszillationsbewegung 11 angehalten ist.

Auch bei der in Figur 4 dargestellten Ausführungsform wird mindestens ein Strompuls 27 abgegeben, sobald die Elektrode 7 den unteren Umkehrpunkt 25 erreicht hat. Während die Oszillationsbewegung 11 durchgeführt wird, wird kein Strom abgegeben.

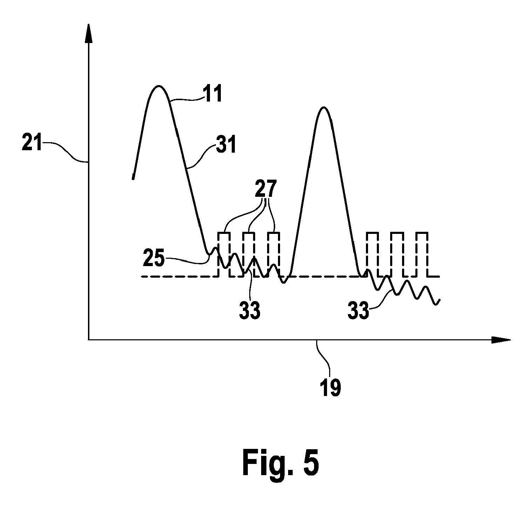

In Figur 5 ist die Bewegung der Elektrode 7 in Abhängigkeit von der Zeit in einer dritten Ausführungsform dargestellt.

Diese unterscheidet sich von den in den Figuren 3 und 4 dargestellten Ausführungsformen durch die Art der Vorschubbewegung der Elektrode 7. Die Vorschubbewegung erfolgt ebenfalls, während sich die Oszillationsbewegung 11 in ihrem unteren Umkehrpunkt 25 befindet. Im Unterschied zu der in Figur 4 dargestellten Ausführungsform erfolgt die Vorschubbewegung jedoch nicht linear. Der Vorschubbewegung ist in der in Figur 5 dargestellten Ausführungsform eine hochfrequente Schwingung 33 mit niedrigerer Amplitude überlagert.

Wie in den in den Figuren 3 und 4 dargestellten Ausführungsformen wird auch bei der in Figur 5 dargestellten Ausführungsform jeweils nur dann Strom abgegeben, während die Elektrode 7 sich an ihrem unteren Umkehrpunkt 25 befindet und somit der Frontspalt 13 zwischen der Elektrode 7 und dem Werkstück 5 am kleinsten ist.

Bei den in den Figuren 3 bis 5 dargestellten Ausführungsformen werden jeweils beispielhaft drei Strompulse 27 abgegeben, während sich die Elektrode 7 an ihrem unteren Umkehrpunkt 25 befindet. Es ist jedoch auch möglich, dass jede beliebige andere Anzahl an Strompulsen abgegeben wird. So kann zum Beispiel nur ein Strompuls abgegeben werden oder es können auch mehr als drei Strompulse abgegeben werden, während sich die Elektrode 7 an ihrem unteren Umkehrpunkt 25 befindet. Die Anzahl der Strompulse 27 ist dabei abhängig von der Frequenz, mit der diese Strompulse erzeugt werden können und von der Zeitdauer, die die Elektrode 7 an ihrem unteren Umkehrpunkt 25 gehalten wird. Je höher die Frequenz ist, mit der die Strompulse 27 erzeugt werden und je länger die Elektrode am unteren Umkehrpunkt 25 gehalten wird, um so größer ist die Anzahl der Strompulse, die abgegeben werden.

Neben dem in den Figuren 3, 4 und 5 dargestellten sinusförmigen Anteil 31 der Oszillationsbewegung 11 ist es auch möglich, dass die Oszillationsbewegung 11 jeweils zwischen dem Erreichen des unteren Umkehrpunktes 25 einen dreieckförmigen, rechteckförmigen oder trapezförmigen Verlauf einnimmt. Auch ist jeder andere, dem Fachmann bekannte Schwingungsverlauf möglich.

Auch die in Figur 5 dargestellte hochfrequente Schwingung 33 kann neben dem dargestellten sinusförmigen Verlauf jeden beliebigen anderen Verlauf einnehmen. So kann die hochfrequente Schwingung 33 zum Beispiel auch eine dreieckförmige, rechteckförmige oder trapezförmige Schwingung sein.

Durch die Oszillationsbewegung wird der Spalt zwischen der Elektrode 7 und dem Werkstück 5 kurz geöffnet. Hierdurch wird der Abtransport der Reaktionsprodukte, wie Schlamm, Gas und Wärme, ermöglicht. Durch erneutes Anhalten der Oszillationsbewegung 11 im unteren Umkehrpunkt 25 wird der Prozess ohne Verlust der Präzision oder der der Abtragsgeschwindigkeit neu gestartet.

## Patentansprüche

1. Verfahren zur elektrochemischen Bearbeitung einer Oberfläche (3) eines Werkstückes (5), bei dem eine Elektrode (7) in das Werkstück (5) gesenkt wird, wobei das Werkstück (5) und die Elektrode (7) von einem Elektrolyten umspült werden und die Elektrode (7) eine Vorschubbewegung (9) und eine Oszillationsbewegung (11) ausführt, wodurch Material von der Oberfläche (3) des Werkstückes (5) abgetragen wird, **dadurch gekennzeichnet, dass** die Oszillationsbewegung (11) der Elektrode (7) in dem dem Werkstück (5) zugewandten Umkehrpunkt (17, 25) für mehr als 10% und weniger als 80% einer Periodendauer eines sich wiederholenden Bewegungsmusters angehalten wird.

2. Verfahren nach Anspruch 1, **dadurch gekennzeichnet, dass** die Elektrode (7) mindestens einen Strompuls (27) abgibt, während sie sich in dem dem Werkstück (5) zugewandten Umkehrpunkt (17, 25) der Oszillationsbewegung (11) befindet.

3. Verfahren nach Anspruch 1 oder 2, **dadurch gekennzeichnet, dass** der dem Werkstück (5) zugewandte Umkehrpunkt (17, 25) der Elektrode (7) mit jeder Oszillationsperiode weiter in das Werkstück (5) verschoben wird.

4. Verfahren nach Anspruch 1 oder 2, **dadurch gekennzeichnet, dass** die Elektrode (7), während sie sich in dem dem Werkstück (5) zugewandten Umkehrpunkt (17, 25) der Oszillationsbewegung (11) befindet, in das Werkstück (5) verschoben wird.

5. Verfahren nach Anspruch 4, **dadurch gekennzeichnet, dass** der Vorschub (29) der Elektrode (7) in das Werkstück (5) linear erfolgt.

6. Verfahren nach Anspruch 4, **dadurch gekennzeichnet, dass** dem Vorschub (29) der Elektrode (7) eine hochfrequente Schwingung (33) überlagert wird, deren Amplitude kleiner ist als die Amplitude der Oszillationsbewegung (11).

7. Verfahren nach einem der Ansprüche 1 bis 6, **dadurch gekennzeichnet, dass** die Oszillationsbewegung (11) zwischen zwei dem Werkstück (5) zugewandten Umkehrpunkten (17, 25) sinusförmig verläuft.

8. Vorrichtung zur elektrochemischen Bearbeitung einer Oberfläche (3) eines Werkstückes (5), eine Elektrode (7) umfassend, welche in Richtung des Werkstückes (5) verschiebbar ist und welche mit einer Oszillationsbewegung (11) beaufschlagbar ist, **dadurch gekennzeichnet, dass** die Oszillationsbewegung (11) in ihrem dem Werkstück (5) zugewandten Umkehrpunkt (17, 25) angehalten werden kann.

9. Vorrichtung nach Anspruch 8, **dadurch gekennzeichnet, dass** der Elektrode (7) während der Vorschubbewegung (9) in dem dem Werkstück (5) zugewandten Umkehrpunkt (17, 25) eine hochfrequente Schwingung (33) überlagert werden kann.
